# FASCICULE DE BREVET EUROPEEN

(11) **EP 4 222 854 B1**
(45) Date de publication et mention de la délivrance du brevet: **25.11.2026**
(21) Numéro de dépôt: 21785850.5
(22) Date de dépôt: 28.09.2021
(51) Int. Cl.: H02M 7/06

(54) **DISPOSITIF D'ENTRÉE DE COMMANDE DÉPORTÉE FILAIRE AUTO-ADAPTATIVE**
SELBSTANPASSENDE VERDRAHTETE FERNSTEUERUNGSEINGABEVORRICHTUNG
SELF-ADAPTIVE WIRED REMOTE CONTROL INPUT DEVICE

(30) Priorité: 29.09.2020 FR 2009889
(43) Date de publication de la demande: 09.08.2023
(73) Titulaire: Legrand France, 87000 Limoges (FR); Legrand SNC, 87000 Limoges (FR)
(72) Inventeur: COUJEAN, Laurent, 87570 Rilhac-Rancon (FR)
(74) Mandataire: Cabinet Camus Lebkiri
(86) Numéro de dépôt international: PCT/EP2021/076599
(87) Numéro de publication internationale: WO 2022/069446

(56) Documents cités:
- US-A1- 2009 072 963
- US-A1- 2018 092 313
- US-A1- 2018 190 083

## Description

### DOMAINE TECHNIQUE DE L'INVENTION

Le domaine technique de l'invention est celui des commandes déportées ayant un besoin énergétique.

La présente invention concerne un dispositif d'entrée de commande déportée pour la commande d'un appareil de commande provenant d'une commande déportée.

### ARRIERE-PLAN TECHNOLOGIQUE DE L'INVENTION

Il est connu des commandes déportées, appelées aussi télécommandes, qui commande un appareil de commande tel que par exemple un variateur modulaire ou une minuterie. Ces commandes déportées sont en parallèles les unes avec les autres et sont reliées entre une phase alternative qui peut être un neutre ou une phase et une entrée auxiliaire de l'appareil de commande. Ces commandes déportées peuvent être un interrupteur mécanique permettant en outre d'éviter l'usure prématuré de ses contacts en passant par l'appareil de commande ou encore de multiplier les interrupteurs de commande de l'appareil de commande. Par exemple, les commandes déportées sont des interrupteurs mécaniques de type bouton poussoir, montées en parallèle entre la phase et une entrée de l'appareil de commande par exemple un variateur ou une minuterie, pour transmettre une commande d'allumer ou éteindre ou encore une variation.

Il est connu du document US2099/072963 une commande de charge périphérique comprenant un redresseur comprenant deux entrées montées en parallèle avec un bouton-poussoir, qui utilise l'alimentation, le câblage et la charge primaire d'un système de sonnette conventionnel pour piloter une charge périphérique de système de sonnette à un courant plus élevé sans risque d'alimenter par inadvertance la charge primaire du système de sonnette conventionnel.

Cependant, certains appareils de commande ont une entrée auxiliaire dite passive et ces commandes déportées ne peuvent donc pas comporter de charge énergivore sur la ligne de commande déportée du fait d'être monté en série avec l'entrée du variateur modulaire qui ne comporte pas de circuit de courant de fuite par cette entrée. Il existe d'autres appareils de commande ayant une entrées auxiliaire dite active et permettant aux commandes déportées d'avoir une charge en parallèle au contact de la commande déportée. Les charges peuvent donc être alimentées par cette ligne de commande déportée par une tension analogique et la partie contact de la commande déportée peuvent communiquer, avec l'appareil de commande par ce même fil de commande, par une commande selon une tension analogique dédiée prédéterminée pour que l'appareil de commande détecte la commande.

Cependant, ces appareils de commande ayant une entrées auxiliaire dite active ne permettent de fonctionner qu'avec des charges ayant une électronique dédiée à ces appareils de commande. En effet, par exemple dans le cas d'une commande déportée comprenant une charge de type voyant non dédiée à l'appareil électronique, le voyant aura tendance à scintiller. En outre, l'appareil de commande a une gestion de courant assez important par cette entrée de commande déportée, par exemple 50mA et donc produire un échauffement de la commande déportée. Enfin, dans le cas de couplage capacitif de forte puissance avec la ligne de commande déportée, l'appareil de commande peut avoir des difficultés de fonctionnement avec la commande déportée. Une des solutions connues est alors d'ajouter une batterie dans le ou les charges de commande déportée ce qui limite le type de charge et en outre n'est pas pratique pour l'utilisateur.

### RESUME DE L'INVENTION

L'invention offre une solution aux problèmes évoqués précédemment, en permettant d'avoir un dispositif d'entrée de commande déportée trois bornes ou fils dont un avec une phase et les deux autres entre la commande déportée et l'électronique de traitement de l'appareil de commande. En outre l'invention offre une solution capable de gérer un courant d'alimentation nécessaire au fonctionnement d'une charge de la commande déportée câblé en série avec le dispositif d'entrée de commande déportée et d'envoyer une information à l'unité de traitement en fonction de la réception d'information de commande de la commande déportée.

Un aspect de l'invention concerne un dispositif d'entrée de commande déportée filaire tel que divulgué dans la revendication indépendante 1.

Le dispositif d'entrée de commande déportée est donc destiné à être monté entre une entrée d'une unité de gestion d'un appareil de commande et au moins une des deux bornes de la commande déportée reliée à une phase, pour transmettre à l'unité de gestion de l'appareil de commande, une commande de la commande déportée.

Grâce à l'invention, d'une part l'unité de gestion de l'appareil de commande reçoit bien une commande lorsqu'une commande est actionnée sur la ligne de commande déportée et en outre permet à une ou plusieurs commandes déportées d'avoir une charge pouvant consommer une tension dans les deux alternances par le biais du redresseur, jusqu'à la consommation maximum du dispositif d'entrée égal au seuil de courant de limitation prédéterminé + la consommation des autres éléments du dispositif d'entrée de commande déportée. Autrement dit, ce dispositif d'entrée de commande déportée permet d'avoir un courant de fuite jusqu'à un courant limité prédéterminé pour la commande déportée sans avoir de commande déportée dédiée à l'appareil de commande.

Outre les caractéristiques qui viennent d'être évoquées dans le paragraphe précédent, le dispositif d'entrée de commande déportée filaire selon un aspect de l'invention peut présenter une ou plusieurs caractéristiques complémentaires parmi les suivantes, considérées individuellement ou selon toutes les combinaisons techniquement possibles :

L'entrée de commande et l'entrée direct comprennent chacun un bornier pour recevoir un conducteur relié respectivement à la commande déportée et la deuxième phase alternative.

Selon un mode de réalisation, la première unité de décision comprend une partie de comparaison et de détection de seuil comprenant:
- une branche résistive située entre la première sortie continu et le retour du redresseur, comprenant au moins deux résistances,
- un interrupteur électronique comprenant sa commande entre les deux résistances de la branche résistive et sa partie interrupteur pour transmettre une commande à la partie émettrice émettant un signal à la sortie de commande pour l'unité de décision. En effet les deux résistances forment un seuil de tension de commande de la commande du transistor qui permet d'identifier s'il y a une commande transmise sur la ligne d'entrée de commande par une commande déportée.

Selon un mode de réalisation, la première unité de décision comprend une partie émettrice comprenant un optocoupleur comprenant une diode commandée par la partie de comparaison et de détection de seuil et un interrupteur électronique, notamment un transistor, monté entre une borne de tension de l'unité de traitement et la sortie de commande pour transmettre la commande, lorsque la diode est allumée, à l'unité de décision dédiée selon sa tension. Cela permet ainsi de séparer et de s'adapter à l'unité de décision, par exemple si l'unité de décision comprend un microcontrôleur, le triac est monté entre une tension du microcontrôleur pour transmettre l'information.

Selon un mode de réalisation, le seuil de courant du premier limiteur de courant est compris entre 1mA et 10mA, par exemple 1mA. Selon un exemple le seuil de courant est réglable, par exemple par le biais d'une résistance de type potentiomètre.

Selon un mode de réalisation, le circuit de limitation est un circuit résistif variable et comprend :
- dans une branche de limitation ayant en série un interrupteur électronique de limitation et une résistance de limitation de courant entre la première sortie continue et le retour, et
- un interrupteur électronique de commande pour commander l'interrupteur électronique de limitation, comprenant sa commande entre l' interrupteur électronique de limitation et la résistance de limitation de courant et sa partie interrupteur entre la commande de l'interrupteur électronique de limitation et la deuxième sortie.

Ainsi la limitation se fait automatiquement, l'interrupteur électronique de limitation est passant jusqu'à ce que la tension aux bornes de la résistance atteint une tension passante de l'interrupteur de commande, le courant dans la résistance de limitation atteint alors la valeur de seuil de courant de limitation et ensuite l'interrupteur électronique de limitation est linéaire pour limiter le courant dans la résistance de limitation.

Selon un exemple, l"interrupteur électronique de limitation du circuit de limitation est un Mosfet.

Selon un autre exemple l"interrupteur électronique de limitation du circuit de limitation est un transistor.

Selon un mode de réalisation, l'unité de limitation comprend un circuit d'alimentation de tension abaissée, par exemple 12 volts, pour alimenter la commande d'un interrupteur électronique du circuit de limitation pour alimenter la partie émettrice de l'unité de décision.

Par exemple le circuit de tension abaissée comprend :
- Une première branche entre la première sortie continue et le retour du redresseur, comprenant un circuit résistif et un deuxième circuit en série avec le circuit résistif, comprenant une diode Zener de la tension abaissée et un condensateur en parallèle avec la diode Zener,
- une deuxième branche entre la première sortie continue du redresseur et une sortie de tension abaissée, comprenant un interrupteur électronique comprenant sa commande reliée entre le circuit résistif et le deuxième circuit et sa partie interrupteur entre la première sortie continue du redresseur et la sortie tension abaissée reliée à la partie émettrice de l'unité de décision et à la commande du circuit de limitation.

Selon un mode de réalisation, le dispositif comprend en outre une unité de protection comprenant une varistance contre les surtensions, notamment au-delà de 420Vac, située entre la première entrée direct et la deuxième entrée AC du redresseur.

selon un exemple, l'unité de protection comprend une protection thermique comprenant une résistance variant avec la température, située entre l'entrée de commande et la deuxième entrée AC du redresseur. Par exemple la résistance à une résistance de 1 Kohms à 70°C. Selon un exemple, la résistance est de type PTC.

Selon un mode de réalisation, le dispositif comprend en outre une unité de commutation entre le redresseur et l'entrée directe permettant à une unité de gestion d'activer ou désactiver les éléments du dispositif d'entrée de commande alimentée par le redresseur. Cela permet par exemple en cas de commandes déportées sans charge, par exemple un interrupteur mécanique d'avoir un dispositif d'entrée de commande déportée sans limitation de courant et donc de diminuer la perte d'énergie inutilement et sans risque d'échauffement. Par exemple, l'unité de commutation comprend un optotriac comprenant la partie interrupteur en série avec le redresseur entre l'entrée directe et la première entrée du redresseur et une partie commande comprenant la diode commandée par une unité de gestion de l'appareil de commande. Le dispositif comprend donc dans cet exemple une entrée de la partie de commande de l'unité de commutation commandée par l'unité de gestion en outre de la sortie de commande destinée à être reliée à l'unité de gestion de l'appareil de commande pour transmettre le signal.

Selon un mode de réalisation, le dispositif de comprend en outre une unité de communication montée en série entre l'entrée de commande et la deuxième entrée alternative du redresseur, par exemple de type courant porteur pour communiquer avec une commande déportée comprenant une telle unité de communication et transmettre cet ordre à l'appareil de commande.

Un autre aspect de l'invention concerne un double dispositif d'entrée de commande déportée comprenant deux dispositifs d'entrée de commande déportée décrit précédemment avec ou sans les différentes caractéristiques complémentaires décrites dans le paragraphe précédent et en ce qu'une des deux entrées directes est destinée à être connectée à une première des deux phases alternative du secteur (neutre ou phase par exemple ) et l'autre entrée direct à l'autre phase alternative du secteur (respectivement phase ou neutre par exemple). Cela permet de câbler le double dispositif d'entrée peut importer que la commande déportée soit reliée à la première phase ou a deuxième phase du réseau. En effet au moins un des deux dispositifs d'entrées de commande déportée fonctionnera avec l'entrée direct reliée à l'autre phase que celle reliée à l'entrée de commande reliée aux deux dispositifs d'entrée de commande déportée.

Selon un mode de réalisation du double dispositif d'entrée de commande déportée, dans lequel l'entrée de commande du premier dispositif d'entrée de commande déportée comprend un bornier et en ce que l'entrée de commande du deuxième dispositif d'entrée de commande déportée est reliée à cette première entrée de commande et en ce que chaque entrée directe comprend un bornier destiné à être raccordé chacun à un conducteur d'une phase du secteur différente l'une de l'autre.

Selon un exemple du mode de réalisation précédent, comprenant une unité de communication tel que décrite dans un mode de réalisation du dispositif d'entrée de commande déportée, et en ce que cette unité de communication est située entre la première entrée de commande et un nœud reliant l'entrée de commande du deuxième dispositif d'entrée de commande déportée et la deuxième entrée du premier redresseur.

Selon un mode de réalisation du double dispositif d'entrée de commande déportée, dans lequel chaque dispositif d'entrée de commande déportée comprend une unité de commutation telle que décrite dans un mode de réalisation précédent.

Un autre aspect de l'invention concerne un appareil de commande comprenant le dispositif d'entrée de commande déportée.

Un autre aspect de l'invention concerne un appareil de commande comprenant le double dispositif d'entrée de commande déportée. Selon un exemple dans lequel le double dispositif d'entrée de commande déportée comprend dans chaque dispositif d'entrée de commande déportée une unité de commutation tel que décrit dans un mode de réalisation du dispositif d'entrée de commande déportée et en ce que l'appareil de commande comprend l'unité de gestion pour produire des étapes d'un programme d'initialisation du double dispositif d'entrée de commande déportée 2U comprenant une étape de commande de fermeture des deux unités de commutation 8 et 8', puis une étape de détection du dispositifs d'entrée de commande déportée A, A' actif en détectant une information de commande par la première ou deuxième sortie de commande 2, 2' du dispositif d'entrée de commande déportée A, A' actif, et enfin une étape de commande d'ouverture de l'unité de commutation de l'autre dispositif d'entrée de commande déportée A, A' n'ayant pas envoyé d'information de commande.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] montre une représentation schématique d'un premier mode de réalisation d'un dispositif d'entrée de commande déportée raccordée à un secteur et une commande déportée.
[Fig. 2a] représente un exemple de schéma électrique du dispositif d'entrée de commande déportée du premier mode de réalisation.
[Fig.2b] représente un chronogramme du dispositif d'entrée de commande déportée.
[Fig.2c] représente un autre chronogramme du dispositif d'entrée de commande déportée.
[Fig. 3] représente une représentation schématique d'un double dispositif d'entrée de commande déportée comprenant deux dispositifs d'entrées de commande déportée du premier mode de réalisation.
[Fig. 4a] représente un exemple de schéma électrique du double dispositif d'entrée de commande déportée de la figure 3.
[Fig. 4b] représente un chronogramme du double dispositif d'entrée de commande déportée de la figure 4a.
[Fig. 5] représente schématiquement un appareil de commande comprenant le double dispositif d'entrée de commande déportée de la figure 3.

### DESCRIPTION DETAILLEE

Les figures sont présentées à titre indicatif et nullement limitatif de l'invention.

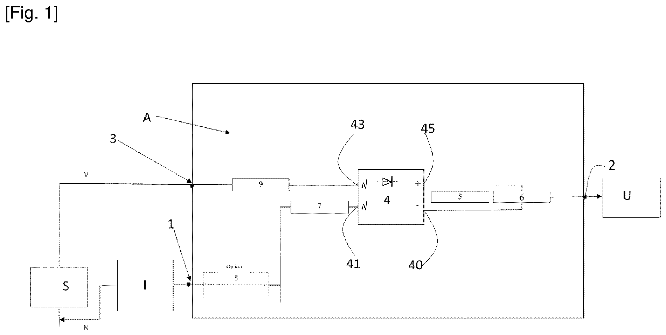

La figure 1 montre une représentation schématique une représentation schématique d'un premier mode de réalisation d'un dispositif d'entrée de commande déportée A raccordée à un secteur S et une commande déportée I.

Le dispositif d'entrée de commande déportée A est filaire et est monté en série entre une unité de gestion U d'un appareil de commande et au moins une commande déportée I à deux fils, pour transmettre à une unité de gestion U de l'appareil de commande, une commande de la commande déportée à charge.

Le dispositif commande déportée A comprend donc une entrée de commande 1 destinée à être raccordée à une des deux bornes de la commande déportée I à deux fils. L'autre borne de la commande déportée I est reliée à une première phase alternative AC, ici le Neutre N. La ligne de neutre N jusqu'à l'entrée de commande 1 est appelée ici, ligne de commande déportée.

Le dispositif commande déportée A comprend donc aussi une sortie de commande 2 reliée à une entrée de l'unité de gestion U pour lui transmettre un signal fonction de la commande déportée I à deux fils.

Le dispositif commande déportée A comprend en outre une première entrée direct 3 raccordée à la deuxième phase alternative AC, ici une phase V. la première entrée de commande et la première entrée direct 3 sont aussi appelées ensembles « bornes 13 du dispositif commande déportée A ».

Le dispositif commande déportée A comprend en outre un premier redresseur de tension AC-DC double alternance, appelée aussi redresseur 4 dans la suite, comprenant une première entrée alternative 43, reliée à l'entrée direct 3 et une deuxième entrée alternative 41 reliée à l'entrée de commande 1. Le redresseur 4 comprend aussi une première sortie courant continu 45 et retour 40, représentant la masse de la partie continue du dispositif A.

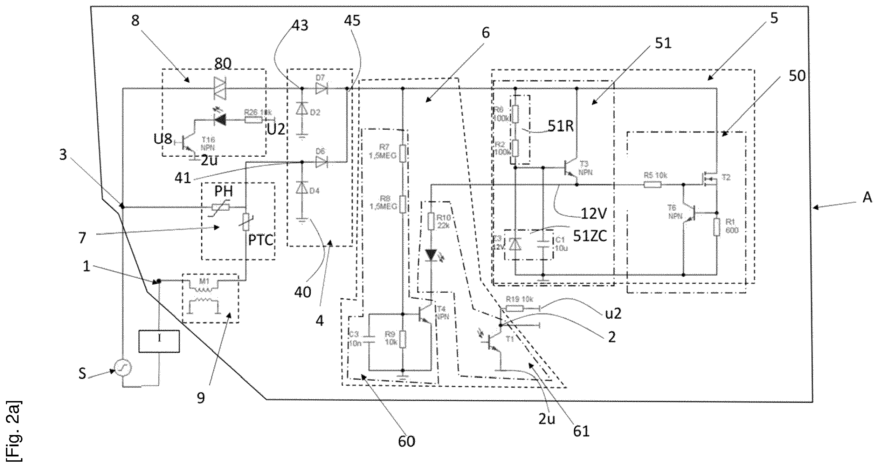

La figure 2a représente un exemple de schéma électrique du dispositif d'entrée de commande déportée du premier mode de réalisation.

On peut voir que dans cet exemple le redresseur 4 comporte quatre diodes D2, D4, D6, D7 bien connu de l'homme du métier pour convertir un courant alternatif en courant continu.

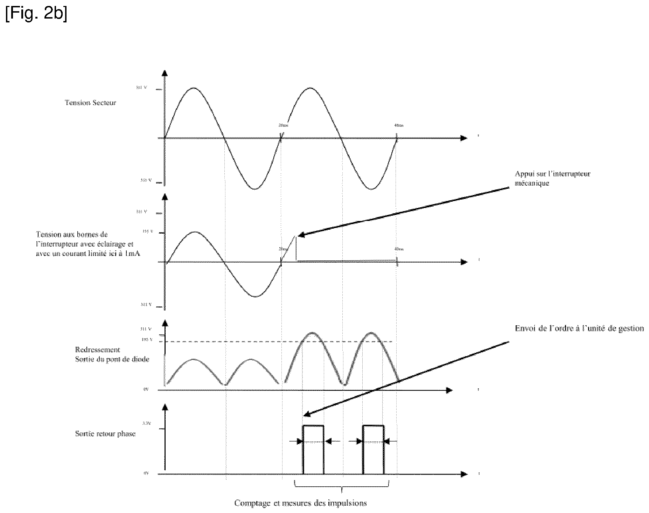

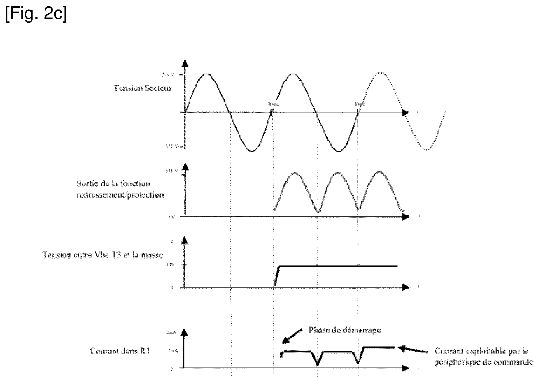

Le dispositif commande déportée A comporte un premier limiteur de courant 5 comprenant un circuit de limitation 50 visible sur la figure 2 pour définir un seuil de courant de limitation IL permettant de limiter un courant de fuite dans la ligne de commande déportée pour une charge de commande déportée.

Le dispositif commande déportée A comporte en outre une première unité de décision 6 reliée entre la première sortie courant continu 45 (appelée dans la suite première sortie) et le retour 40 soit en parallèle avec le premier limiteur de courant 5.

La première unité de décision 6 comprend une partie de comparaison et de détection de seuil 60 avec la tension de sortie de redressement du premier redresseur 4 et une partie émettrice 61 pour transmettre un signal de commande déportée lorsque le seuil est détecté par la partie de comparaison et de détection de seuil 60.

La partie de comparaison et de détection de seuil 60 comprend une branche résistive située entre la première sortie 45 et le retour 40 du redresseur 4. Cette branche résistive comprend une résistance R9 de 10 kilos ohms et deux résistances R7, R8 de 1.5 Méga ohms formant ensemble une résistance globale de 3 Méga ohms. La partie de comparaison et de détection de seuil 60 comprend en outre un interrupteur électronique, ici un transistor T4 de type NPN comprenant sa commande entre la résistance R9 et la résistance globale, en l'occurrence donc entre R8 et R9. Dans cet exemple, la partie de comparaison et de détection de seuil 60 comprend en outre un condensateur C3 de 10NF en parallèle avec la résistance R9. L'interrupteur électronique T4 permet par sa partie interrupteur (collecteur émetteur) de transmettre une commande à la partie émettrice émettant un signal à l'unité de décision. Lorsqu'il y a une tension de 0.6 volts aux bornes de R9, le transistor T4 est suffisamment passant pour transmettre une commande (en se fermant soit en étant saturé soit en étant en mode linéaire mais à très faible résistivité). Ainsi, dans cet exemple dès que la tension aux bornes 13, (entrée de commande 1 et entrée directe 3) du dispositif d'entrée A atteint une tension seuil, ici il y a environ 195 Volts, le transistor T4 est passant. Bien entendu la tension seuil peut être différente en modifiant les valeurs des résistances de la branche résistive.

La figure 2B représente un chronogramme sur lequel en première ligne est représentée la tension secteur S, en deuxième ligne la tension aux bornes d'une commande déportée (ici interrupteur mécanique avec une charge de type voyant), en troisième ligne la tension en sortie de pont redresseur et en quatrième ligne la fermeture de l'interrupteur électronique T4.

Comme on peut le voir, sur ce chronogramme, la tension aux bornes 13 du dispositif d'entrée de commande déportée A a une valeur crête d'environ 155V du fait de charge (voyant) de la commande déportée I et lors de l'appui de fermeture du contact de la commande déportée, le voyant est dérivé par le contact « shunté » et donc la tension aux bornes 13 a une valeur crête de 311v (soit 220V efficace). Ainsi comme on peut le voir sur la troisième et quatrième ligne, dés que la tension à la sortie redressée dépasse la tension seuil, ici dans cet exemple 195Volts, le transistor T4 est passant et peut ainsi transmettre à la sortie de commande 2 une information de fermeture de contact d'au moins une commande déportée I.

Dans cet exemple, la partie émettrice comprend un optocoupleur **T1** comprenant une diode commandée par le transistor **T4** de la partie de comparaison et de détection de seuil 60. L'optocoupleur **T1** comprend en l'occurrence un transistor, ici de type NPN monté entre une borne de tension u2, 2u de l'unité de gestion U et la sortie de commande 2 pour transmettre la commande, lorsque la diode est allumée, à l'unité de gestion U dédiée selon sa tension, par exemple 3.3Volts.

Dans cet exemple, la sortie de commande 2 est flottante et est reliée à un nœud relié au transistor **T1** et à une entrée d'alimentation de commande u2 ayant une tension positive Vcc de l'unité de gestion U ici un microcontrôleur. Le transistor de l'optocoupleur **T1** est en outre monté entre une sortie d'alimentation de commande 2u correspondant à la masse de l'unité de gestion U et le nœud. Cela permet ainsi de séparer et de s'adapter à l'unité de gestion U, par exemple si l'unité de gestion U comprend un microcontrôleur, le triac est monté entre une tension du microcontrôleur pour transmettre l'information.

La diode de l'optocoupleur est montée dans cet exemple entre le transistor **T4** relié au retour 40 et une résistance R10, ici de 22Kilos ohms, reliée à une sortie tension abaissée 12V d'un circuit d'alimentation en tension abaissée 51 de l'unité de limitation 5. En l'occurrence la tension abaissée est de 12 volts.

Le circuit d'alimentation en tension abaissée 51 comprend une première branche entre la première sortie 45 et le retour 40 du redresseur 4, comprenant un circuit résistif 51R comprenant ici une résistance R6 et une résistance R2 en série chacune de valeur 100 kilo ohms, et un deuxième circuit 51ZC en série avec le circuit résistif, comprenant une diode Zener Z3 de la tension abaissée, ici 12 Volts, et un condensateur C1, ici 10µf, en parallèle avec la diode Zener Z3.

Le circuit d'alimentation en tension abaissée 51 comprend une deuxième branche entre la première sortie 45 du redresseur 4 et la sortie de tension abaissée 12V. La deuxième branche comprend un interrupteur électronique T3 (ici un transistor NPN) comprenant sa commande reliée entre le circuit résistif 51R et le deuxième circuit 51ZC et sa partie interrupteur entre la première sortie 45 et la sortie tension abaissée 12V reliée à la résistance R10 de la partie émettrice 61.

En outre cette sortie tension abaissée 12V est reliée à une commande du circuit de limitation 50 pour l'alimenter afin qu'un courant traversant ce circuit ne dépasse pas un seuil de courant du premier limiteur de courant.

Dans cet exemple, le seuil de courant du premier limiteur de courant est de 1mA mais pourrait être variable et être compris entre 1 et 10mA et pourrait être sélectionner manuellement par un utilisateur.

Le circuit de limitation 50 est donc un circuit résistif variable pour limiter le courant jusqu'au seuil de de courant, comprenant une branche de limitation ayant en série un interrupteur électronique de limitation T2 et une résistance de limitation de courant R1 entre la première sortie 45 et le retour 40. L'interrupteur électronique de limitation T2 est ici un MOSFET mais pourrait être un transistor, par exemple NPN. Dans le cas où l'interrupteur électronique de limitation T2 est un transistor de type PNP, il faut inverser l'emplacement de la résistance R1 et l'interrupteur T6 décrit ci-dessous.

La commande du circuit de limitation 50 comprend en outre un interrupteur électronique de commande T6 pour commander l'interrupteur électronique de limitation T2, comprenant sa commande entre l' interrupteur électronique de limitation T2 et la résistance de limitation de courant R1. L'interrupteur électronique de commande T6 comprend sa partie interrupteur entre la commande de l'interrupteur électronique de limitation T2 et le retour40.

La figure 2c représente un chronogramme représentant des tensions et courant montrant le fonctionnement du limitateur de courant 6.

La première ligne représente la tension secteur S, en deuxième ligne la tension redressée du pont redresseur, en troisième ligne la tension de sortie 12V produite par la tension Vbe du transistor T3, en quatrième ligne le courant limité par la résistance R1 et la variation en mode linéaire de la résistance de l'interrupteur électronique T2 variant en fonction de l'interrupteur T6 qui dérive le courant de la commande de T2 selon la tension aux bornes de R1 de 600 ohms correspondant à sa tension Vbe de 0.6Volts soit un courant limité à 0.6V/600 ohms = 1mA . Le limiteur de courant 6 comprend une résistance R5, ici de 10 Kilos ohms pour éviter un court-circuit lorsque les transistors T3 et T6 sont saturés.

Dans ce mode de réalisation, le dispositif d'entrée de commande déportée A comprend en outre une unité de protection 7 comprenant une varistance PH contre les surtensions, notamment au-delà de 420Vac, située entre la première entrée direct 3 et la deuxième entrée AC 41 du redresseur 4. Ainsi dès que la tension crête du secteur alternatif S dépasse 420 Volts, la varistance PH écrête la tension en abaissant sa résistance.

En outre dans cet exemple, l'unité de protection 7 comprend en option une protection thermique comprenant une résistance PTC variant avec la température située entre l'entrée de commande 1 et la deuxième entrée AC 41 du redresseur 4. Ainsi au-delà d'une température, la résistance PTC augmente fortement jusqu'à former un circuit ouvert quand la température du dispositif d'entrée de commande A déportée atteint une température seuil, par exemple 70°C.

Le dispositif d'entrée de commande A peut comporter en option, comme dans cet exemple de ce mode de réalisation, une unité de commutation 8 entre le redresseur 4 et l'entrée directe 3 permettant à une unité de gestion U d'activer ou désactiver le double redressement pour le premier limiteur de courant 50 et donc l'alimentation en double alternance de la charge de la commande déportée I. Ainsi en cas de commandes déportées sans charge, par exemple un interrupteur mécanique simple, ou encore en cas de programme de commande dégradée à certaines heures d'une charge du ou des commandes déportées (par exemple voyant scintillant de 23h à 5h), d'avoir un dispositif d'entrée de commande déportée A sans limitation de courant et donc de diminuer la perte d'énergie inutilement.

L'unité de commutation 8 comprend en l'occurrence, un optotriac 80 comprenant la partie interrupteur entre l'entrée directe 3 et la deuxième entrée 43 du redresseur 4. L'unité de commutation 8 comprend une partie commande de la partie interrupteur comprenant la diode commandée par l'unité de gestion U de l'appareil de commande. En particulier, la partie de commande est reliée entre l'entrée d'alimentation de commande u2 ayant une tension positive Vcc et la sortie d'alimentation de commande 2u correspondant à la masse de l'unité de gestion U. La partie de commande comprend en série une résistance R26, ici de 10 Kilos ohms, la diode de l'optocoupleur 80 et un transistor **T16** reliée à une entrée de commande U8 du dispositif d'entrée de commande A, reliée à l'unité de gestion U pour commander le transistor **T16** et donc l'optocoupleur 80.

Enfin, le dispositif d'entrée de commande déportée peut comprendre en option une outre une unité de communication 9 montée en série avec le redresseur 4 entre l'entrée de commande 1 et la deuxième entrée alternative 41. L'unité de communication 9 est par exemple de type courant porteur, par exemple un modem CPL connu dans le domaine pour communiquer avec une commande déportée I comprenant une telle unité de communication et transmettre cet ordre à l'unité de gestion de l'appareil de commande par ce moyen de communication.

Dans cet exemple, le dispositif d'entrée de commande A est déportée est un dispositif séparé de l'appareil de commande et de la commande déportée mais pourrait être incorporé dans l'appareil de commande.

Dans cet exemple, le dispositif d'entrée de commande A a son entrée de commande 1 reliée à la phase Neutre N, mais pourrait être reliée à la phase P, dans ce cas l'entrée direct doit être reliée à l'autre phase, en l'occurrence ici le neutre N.

Un tel dispositif d'entrée de commande A, comprenant ces options, nécessite donc de connaître la nature de la ligne d'entrée, c'est-à-dire qu'elle soit Neutre N ou phase P pour câbler l'entrée direct 3 à l'autre phase du secteur S.

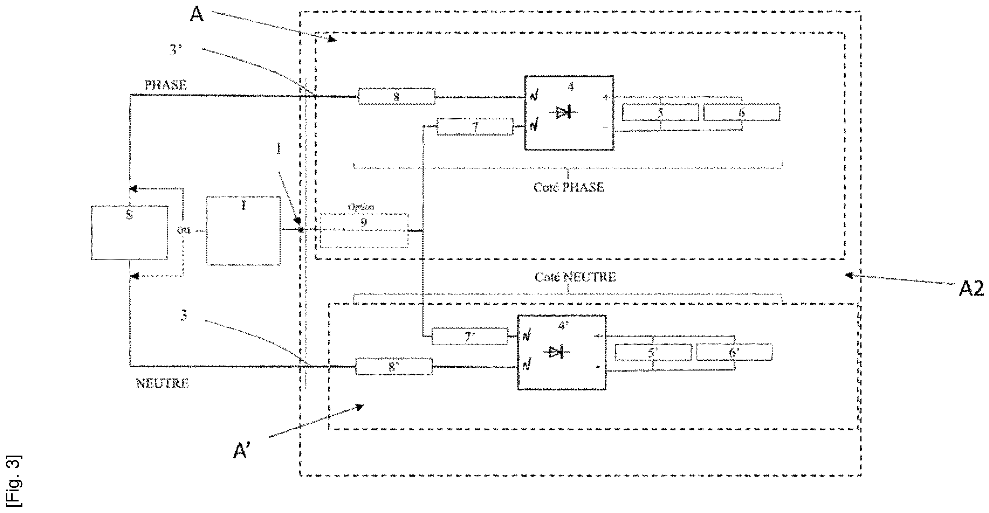

L'invention concerne aussi un double dispositif d'entrée de commande A2 représentée sur la figure 3 comprenant le dispositif d'entrée de commande A et un deuxième dispositif d'entrée de commande A' ayant chacun leur entrée à une des deux phases du secteurs S. Ainsi cela permet d'éviter de connaitre la nature de la ligne d'entrée.

Dans ce cas, le deuxième dispositif d'entrée de commande A' est différent du dispositif d'entrée de commande A en ce qu'il ne comporte l'unité de communication 9 puisque celle-ci fonctionne dans le cas du fonctionnement du premier ou deuxième dispositif d'entrée de commande déportée A, A'.

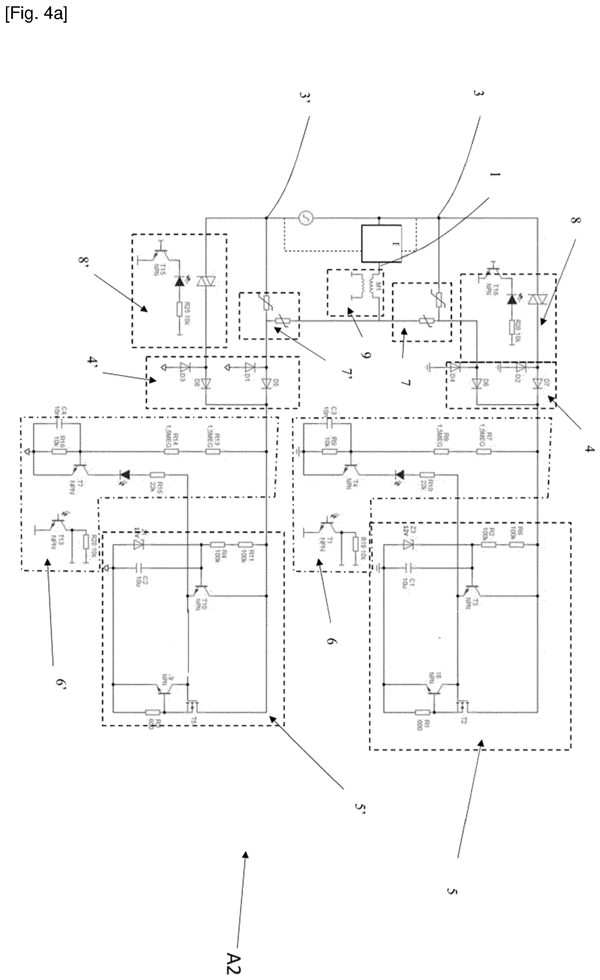

La figure 4a représente un exemple de schéma électrique du double dispositif d'entrée de commande déportée de la figure 3. Le double dispositive d'entrée de commande déportée A2 comprend donc dans le deuxième dispositif d'entrée de commande A', une sortie de commande 2', une deuxième entrée direct 3', un deuxième redresseur 4', un deuxième limiteur de courant 5', une deuxième unité de décision 6', une deuxième unité de protection 7', et enfin une deuxième unité de commutation 8'. Le double dispositive d'entrée de commande déportée A2 peut donc comprendre une seule entrée de commande 1 et chaque deuxième entrée 41 de chaque redresseur 4, 4' est reliée à cette entrée de commande 1 ici par le biais de l'unité de communication 9. Dans cet exemple il y a deux résistances thermiques PTC chacune reliée à l'entrée de commande 1 par le biais éventuellement de l'unité de communication 9 mais une seule des deux unités de protection 7,7'peut comprendre la résistance thermique PTC ayant une borne reliée à l'entrée de commande 1 par le biais éventuellement de l'unité de communication 9 et dont l'autre borne est reliée à l'autre unité de protection 7', 7.

Selon une particularité, l'unité de gestion de l'appareil de commande est configurée pour produire des étapes d'un programme un programme d'initialisation du double dispositif d'entrée de commande déportée 2U comprenant une étape de commande de fermeture des deux unités de commutation 8 et 8', puis une étape de détection du dispositif d'entrée de commande déportée A, A' actif en détectant une information de commande par la première ou deuxième sortie de commande 2, 2' du dispositif d'entrée de commande déportée A, A' actif, et enfin une étape de commande d'ouverture de l'unité de commutation 8', 8 de l'autre dispositif d'entrée de commande déportée A', A n'ayant pas envoyé d'information de commande.

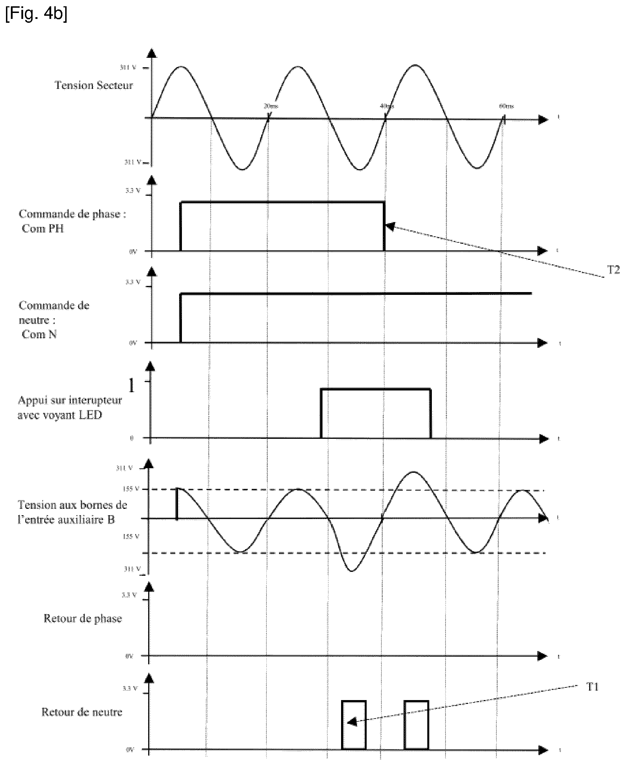

La figure 4b représente un chronogramme de tension du double dispositif représentant un exemple de détection du dispositif d'entrée de commande déportée A actif.

La première ligne représente la tension de secteur S, la deuxième et troisième ligne respectivement représente la commande de l'unité de commutation 8, 8 de chaque dispositif d'entrée de commande déportée, la quatrième ligne la commande de la commande déportée, ici un appuie sur interrupteur ayant une charge tel qu'un voyant, la cinquième ligne la tension aux bornes du dispositif d'entrée de commande déportée actif A, la cinquième et sixième lignes respectivement de la première et deuxième sortie de commande 2' et 2.

Comme on peut le voir, l'unité de gestion U reçoit une première commande à l'instant **T1** uniquement lors d'une alternance négative de la première sortie de commande 2 et donc peut en conclure que le deuxième dispositif d'entrée de commande A' est inactif et peut donc commander l'ouverture de son unité de commutation visible à l'instant T2.

Selon un autre exemple, l'unité de gestion U comprend un moyen d'identification de polarité de l'alternance du secteur en continu et la sortie de commande 2 et la sortie de commande 2' sont connectées ensemble et l'unité de gestion U identifie le dispositif d'entrée de commande déportée A, A' actif en comparant l'instant **T1** de réception de la commande et la polarité détectée de l'alternance de son alimentation.

Bien entendu, un appareil de commande peut comprendre le dispositif d'entrée de commande déportée A ou le double dispositif d'entrée de commande déportée A2.

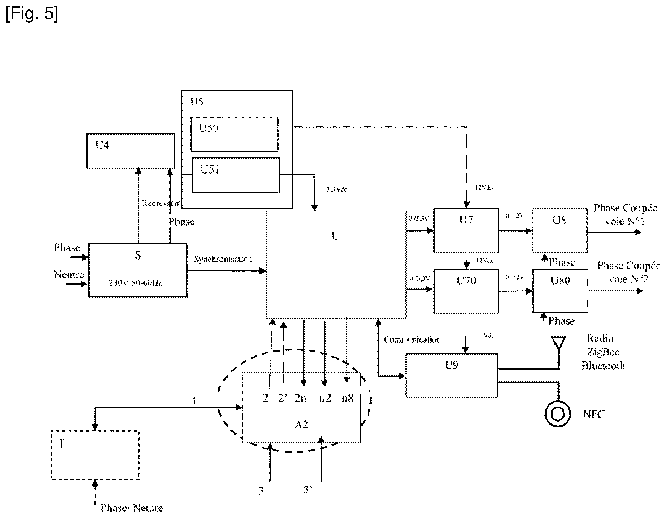

La figure 5 représente un appareil de commande comprenant le double dispositif d'entrée de commande déportée A2.

L'appareil de commande comprend donc une unité de gestion U et dans cet exemple qui est un variateur, un redresseur U4 comme celui du dispositif de l'entrée de commande déportée, une alimentation de tension abaissée U5 comprenant ici un premier circuit d'alimentation de tension abaissée U51 pour l'unité de gestion U, par exemple de 3.3 Volts pour un microcontrôleur de l'unité de gestion U et un deuxième circuit d'alimentation de tension abaissée U50 , par exemple 12 volts, pour alimenter deux circuits de transfert de commande U7, U70, chacun relié entre des Mosfets U80, U81 de l'appareil de commande. L'appareil de commande peut comprendre en outre une unité de communication U9 alimentée par un des deux circuits d'alimentation de tension abaissée, en l'occurrence le premier de 3.3 volts, pour communiquer sans fil par exemple sous un protocole Zigbee ou Bluetooth ou wifi ou encore NFC etc...

Le double dispositif d'entrée de commande déportée A2 comprend donc ses deux entrées direct 3, 3' reliées chacune de façon indépendante à la phase et neutre du secteur S, son entrée de commande 1 à la ou les commande déportée I, l'entrée et la sortie d'alimentation de commande u2, 2u, ses entrées de commande U8 et sa sortie ou ses sorties de commande 2, 2' à l'unité de gestion U pour transmettre l'information de commande.

Bien entendu, les différentes unités du ou des dispositifs d'entrée de commande déportée peuvent être différente, les exemples de schéma électrique ne sont que des exemples et peuvent être modifiée ainsi que les différentes valeurs données. Les interrupteurs électroniques peuvent être de d'autre type que les transistors NPN, par exemple PNP ou encore des Mosfet ou triac etc...

Sauf précision contraire, un même élément apparaissant sur des figures différentes présente une référence unique.

## Revendications

1. Dispositif d'entrée de commande déportée (A, A') filaire destiné à être câblé en série entre une unité de gestion (U) d'un appareil de commande et à une des deux bornes d'une commande déportée à (I) l'autre borne étant reliée à une des deux phases alternatives (P, N) du secteur, pour transmettre à l' unité de gestion (U) de l'appareil de commande, une commande de la commande déportée à charge, le dispositif comprenant :
- une entrée de commande (1) destinée à être raccordée à une commande déportée (I) à deux fils, reliée à la première phase alternative (P, N),
- une première entrée directe (3, 3') destinée à être raccordée à la deuxième phase alternative (N, P),
- une sortie de commande (2, 2') destinée à être reliée à une entrée de l'unité de gestion (U),
- un premier redresseur (4, 4') de tension alternative en tension continue, comprenant une première entrée alternative (43) reliée à l'entrée directe (3, 3') et une deuxième entrée alternative (41) reliée à l'entrée de commande (1), une première sortie continue (45) et un retour (40),
- une première unité de décision (6, 6') entre la première sortie continue (45) et le retour (40), configurée pour transmettre un signal de commande par la sortie de commande (2, 2') lorsque la tension entre la première sortie continue (45) et le retour (40) atteint un seuil,
- un premier limiteur de courant (5, 5') en parallèle avec la première unité de décision (6, 6'), comprenant un circuit de limitation (50) configuré pour limiter le courant traversant le circuit de limitation jusqu'à un seuil de courant de limitation prédéterminé.

2. Dispositif d'entrée de commande déportée selon la revendication 1 dans lequel la première unité de décision (6, 6') comprend une partie de comparaison et de détection de seuil (60) comprenant:
- une branche résistive située entre la première sortie continue (45) et le retour (40) du redresseur (4), comprenant au moins deux résistances (R7, R8, R9),
- un interrupteur électronique (T4) comprenant sa commande entre les deux résistances (R7, R8, R9) de la branche résistive et sa partie interrupteur pour transmettre une commande à la partie émettrice émettant un signal à l'unité de décision (61).

3. Dispositif d'entrée de commande déportée selon la revendication 1 ou 2 dans lequel le seuil de courant du premier limiteur de courant est compris entre 1mA et 10mA, par exemple 1mA.

4. Dispositif d'entrée de commande déportée selon l'une quelconque des revendications précédentes, comprenant en outre une unité de commutation (8, 8') entre le redresseur (4, 4') et l'entrée directe (3, 3') permettant à une unité de gestion (U) d'activer ou désactiver les éléments du dispositif d'entrée de commande (A, A') alimentée par le redresseur (4, 4').

5. Dispositif d'entrée de commande (A, A') déportée selon l'une quelconque des revendications précédentes, comprenant en outre une unité de communication (9, 9') montée en série entre l'entrée de commande (1) et la deuxième entrée alternative (41) du redresseur (4, 4'), par exemple de type courant porteur, pour communiquer avec une commande déportée (I) comprenant une telle unité de communication et transmettre cet ordre à l'appareil de commande.

6. Dispositif d'entrée de commande déportée selon l'une quelconque des revendications précédentes, dans lequel la première unité de décision (6, 6') comprend une partie émettrice (61) comprenant un optocoupleur (T1) comprenant une diode commandée par la partie de comparaison et de détection de seuil et un interrupteur électronique, notamment un transistor, monté entre une borne de tension (2u, u2) de l'unité de traitement (u) et la sortie de commande (2) pour transmettre le signal de commande, lorsque la diode est allumée, à l'unité de décision (U) dédiée selon sa tension.

7. Double dispositif d'entrée de commande déportée (A2) comprenant deux dispositifs d'entrée de commande déportée (A, A') selon l'une quelconque des revendications précédentes, et en ce qu'une des deux entrées directes (3, 3') est destinée à être connectée à une première des deux phases alternative (N, P) du secteur (S) et l'autre entrée directes (3', 3) à l'autre phase alternative (P, N) du secteur (S).

8. Double dispositif d'entrée de commande déportée (A2) selon la revendication précédente dans lequel, chaque dispositif d'entrée de commande déportée (A, A') comprend une unité de commutation (8, 8').

9. Appareil de commande comprenant un double dispositif d'entrée de commande déportée selon la revendication 7 ou 8 ou un dispositif d'entrée de commande déportée selon l'une des revendications 1 à 6.

10. Appareil de commande comprenant un double dispositif d'entrée de commande déportée selon la revendication 8, dans lequel l'appareil de commande comprend l'unité de gestion (U) configurée pour produire des étapes d'un programme d'initialisation du double dispositif d'entrée de commande déportée (2U) comprenant :
- une étape de commande de fermeture des deux unités de commutation (8, 8'),
- puis une étape de détection du dispositif d'entrée de commande déportée (A, A') actif en détectant une information de commande par la première ou deuxième sortie de commande (2, 2') du dispositif d'entrée de commande déportée (A, A') actif, et enfin
- une étape de commande d'ouverture de l'unité de commutation (8', 8) de l'autre dispositif d'entrée de commande déportée (A', A) n'ayant pas envoyé d'information de commande.

## Patentansprüche

1. Drahtgebundene Fernsteuerungseingangsvorrichtung (A,A'), die dazu bestimmt ist, zwischen einer Steuereinheit (U) eines Steuergeräts und einem der beiden Anschlüsse einer Fernsteuerung (I) Fernsteuerung in Reihe geschaltet zu werden, um einen Befehl der zugeordneten Fernsteuerung an eine Steuereinheit U des Steuergeräts zu übertragen, wobei die Vorrichtung umfasst:
- einen Steuereingang (1), der dazu bestimmt ist, an eine an eine erste Wechselstromphase (P,N) angeschlossene Zweidraht-Fernsteuerung (I) angeschlossen zu werden,
- einen ersten Direkteingang (3, 3'), der dazu bestimmt ist, an die zweite Wechselstromphase (N, P) angeschlossen zu werden,
- einen Steuerausgang (2, 2'), der dazu bestimmt ist, mit einem Eingang der Steuereinheit (U) verbunden zu werden,
- einen ersten Gleichrichter (4,4') zur Umwandlung von Wechselspannung in Gleichspannung, der einen ersten Wechselspannungseingang (43), der mit dem Direkteingang (3,3') verbunden ist, und einen zweiten Wechselspannungseingang (41), der mit dem Steuereingang (1) verbunden ist, einen ersten Gleichstromausgang (45) und eine Rückleitung (40) umfasst,
- eine erste Entscheidungseinheit (6,6') zwischen dem ersten Gleichstromausgang (45) und der Rückleitung (40), um über den Steuerausgang (2,2') ein Steuersignal zu übertragen, wenn die Spannung zwischen dem ersten Gleichstromausgang (45) und der Rückleitung (40) einen Schwellenwert erreicht,
- einen ersten Strombegrenzer (5,5') parallel zur ersten Entscheidungseinheit (6,6'), der eine Begrenzungsschaltung (50) umfasst, um den durch die Begrenzungsschaltung fließenden Strom auf einen vorgegebenen Begrenzungsstromschwellenwert zu begrenzen.

2. Fernsteuerungseingangsvorrichtung nach Anspruch 1, bei der die erste Entscheidungseinheit (6, 6') einen Abschnitt zum Vergleich und zum Erfassen eines Schwellenwerts (60) umfasst, die Folgendes umfasst:
- eine zwischen dem ersten Gleichstromausgang (45) und der Rückleitung (40) des Gleichrichters (4) angeordnete Widerstandsverbindung, die mindestens zwei Widerstände (R7, R8, R9) umfasst,
- einen elektronischen Schalter (T4), dessen Ansteuerung zwischen den beiden Widerständen (R7, R8, R9) der Widerstandsverbindung und dessen Schalterteil angeordnet ist, um einen Befehl an den Sendeabschnitt zu übertragen, der ein Signal an die Entscheidungseinheit (61) sendet.

3. Fernsteuerungseingangsvorrichtung nach Anspruch 1 oder 2, bei der der Stromschwellenwert des ersten Strombegrenzers zwischen 1 mA und 10 mA, beispielsweise 1 mA, liegt.

4. Fernsteuerungseingangsvorrichtung nach einem der vorstehenden Ansprüche, die ferner eine Schalteinheit (8, 8') zwischen dem Gleichrichter (4, 4') und dem Direkteingang (3, 3') umfasst, die es einer Steuereinheit (U) ermöglicht, die vom Gleichrichter (4, 4') gespeisten Elemente der Fernsteuerungseingangsvorrichtung (A, A') zu aktivieren oder zu deaktivieren.

5. Fernsteuerungseingangsvorrichtung (A, A') nach einem der vorstehenden Ansprüche, die ferner eine Kommunikationseinheit (9, 9') umfasst, die zwischen dem Steuereingang (1) und dem zweiten Wechselspannungseingang (41) des Gleichrichters (4, 4') in Reihe geschaltet ist, beispielsweise vom Typ "Trägerstrom", um mit einer Fernsteuerung (I) zu kommunizieren, die eine solche Kommunikationseinheit umfasst, und diesen Befehl an das Steuergerät zu übertragen.

6. Fernsteuerungseingangsvorrichtung nach einem der vorstehenden Ansprüche, bei der die erste Entscheidungseinheit (6, 6') einen Sendeteil (61) umfasst, der einen Optokoppler (T1) mit einer vom Vergleichs- und Schwellenwertdetektionsteil gesteuerten Diode und einem elektronischen Schalter, insbesondere einen Transistor, umfasst, der zwischen einem Spannungsanschluss (2u, u2) der Verarbeitungseinheit (u) und dem Steuerausgang (2) geschaltet ist, um das Steuersignal, wenn die Diode leuchtet, an die entsprechend ihrer Spannung zugeordnete Entscheidungseinheit (U) zu übertragen.

7. Doppelte Fernsteuerungseingangsvorrichtung (A2), die zwei Fernsteuerungseingangsvorrichtungen (A, A') gemäß einem der vorstehenden Ansprüche umfasst, und **dadurch gekennzeichnet, dass** einer der beiden Direkteingänge (3, 3') dazu bestimmt ist, an eine erste der beiden Wechselstromphasen (N, P) des Netzes (S) angeschlossen zu werden, und der andere Direkteingang (3', 3) an die andere Wechselstromphase (P, N) des Netzes (S).

8. Doppelte Fernsteuerungseingangsvorrichtung (A2) nach dem vorstehenden Anspruch, bei der jede Fernsteuerungseingangsvorrichtung (A, A') eine Schalteinheit (8, 8') umfasst.

9. Steuergerät, das eine doppelte Fernsteuerungseingangsvorrichtung nach Anspruch 7 oder 8 oder eine Fernsteuerungseingangsvorrichtung nach einem der Ansprüche 1 bis 6 umfasst.

10. Steuergerät mit einer doppelten Fernsteuerungseingangsvorrichtung nach Anspruch 8, bei der das Steuergerät die Steuereinheit (U) umfasst, die so gestaltet ist, dass sie Schritte eines Initialisierungsprogramms für die doppelte Fernsteuerungseingangsvorrichtung (2U) erzeugt, umfassend:
- einen Schritt zur Ansteuerung des Schließens der beiden Schalteinheiten (8, 8'),
- gefolgt von einem Schritt zum Erkennen der aktiven Fernsteuerungseingangsvorrichtung (A, A') durch Erfassen einer Steuerinformation über den ersten oder zweiten Steuerausgang (2, 2') der aktiven Fernsteuerungseingangsvorrichtung (A, A') und schließlich
- einen Schritt zur Ansteuerung des Öffnens der Schalteinheit (8', 8) der anderen Fernsteuerungseingangsvorrichtung (A',A), die keine Steuerinformation gesendet hat.

## Claims

1. A wired remote control input device (A, A') for being connected in series between a management unit U of a control apparatus and one of the two terminals of a remote controller (I) the other terminal being connected to one of the two AC phases (P, N) of the mains supply, to transmit to the management unit U of the control apparatus a command from the remote control with a load, the device comprising:
- a control input (1) for being connected to a two-wire remote controller (I) connected to the first AC phase (P, N),
- a first direct input (3, 3') for being connected to the second AC phase (N, P),
- a control output (2, 2') for being connected to an input of the management unit (U),
- a first AC-to-DC rectifier (4, 4'), comprising a first AC input (43) connected to the direct input (3, 3') and a second AC input (41) connected to the control input (1), a first DC output (45) and a feedback (40),
- a first decision unit (6, 6') between the first DC output (45) and the feedback (40),configured to transmit a control signal via the control output (2, 2') when the voltage between the first DC output (45) and the feedback (40) reaches a threshold,
- a first current limiter (5, 5') in parallel with the first decision unit (6, 6'), comprising a limiting circuit (50) configured to limiting the current passing through the limiting circuit to a predetermined limiting current threshold.

2. The remote control input device according to claim 1, wherein the first decision unit (6, 6') comprises a comparison and threshold detection part (60) comprising:
- a resistive branch located between the first DC output (45) and the feedback (40) of the rectifier (4), comprising at least two resistors (R7, R8, R9),
- an electronic switch (T4) comprising its control terminal between the two resistors (R7, R8, R9) of the resistive branch and its switch part to transmit a command to the emitting part emitting a signal to the decision unit (61).

3. The remote control input device according to claim 1 or 2, wherein the current threshold of the first current limiter is between 1 mA and 10 mA, for example 1 mA.

4. The remote control input device according to any of the preceding claims, further comprising a switching unit (8, 8') between the rectifier (4, 4') and the directinput (3, 3') enabling a management unit (U) to activate or deactivate the elements of the control input device (A, A') supplied by the rectifier (4, 4').

5. The remote control input device (A, A') according to any of the preceding claims, further comprising a communication unit (9, 9') connected in series between the control input (1) and the second AC input (41) of the rectifier (4, 4'), for example of the power-line communication type, to communicate with a remote controller (I) comprising such a communication unit and transmit this command to the control apparatus.

6. The remote control input device according to any of the preceding claims, wherein the first decision unit (6, 6') comprises an emitting part (61) comprising an optocoupler (T1) comprising a diode controlled by the comparison and threshold detection part and an electronic switch, especially a transistor, connected between a voltage terminal (2u, u2) of the processing unit (u) and the control output (2) to transmit the control signal, when the diode is on, to the dedicated decision unit (U) according to its voltage.

7. A dual remote control input device (A2) comprising two remote control input devices (A, A') according to any of the preceding claims, and in that one of the two direct inputs (3, 3') is for being connected to a first of the two AC phases (N, P) of the mains supply (S) and the other DC input (3', 3) to the other AC phase (P, N) of the mains supply (S).

8. The dual remote control input device (A2) according to the preceding claim, wherein each remote control input device (A, A') comprises a switching unit (8, 8').

9. A control apparatus comprising a dual remote control input device according to claim 7 or 8 or a remote control input device according to any one of claims 1 to 6.

10. A control apparatus comprising a dual remote control input device according to claim 8, wherein the control apparatus comprises the management unit (U) configured to produce steps of an initialisation program for the dual remote control input device (2U), comprising:
- a step of controlling closure of both switching units (8, 8'),
- and then a step of detecting the active remote control input device (A, A') by detecting control information via the first or second control output (2, 2') of the active remote control input device (A, A'), and finally
- a step of controlling opening of the switching unit (8', 8) of the other remote control input device (A', A) that has not sent control information.
